# EUROPEAN PATENT APPLICATION

(11) **EP 2 770 517 A1**
(43) Date of publication of application: **27.08.2014**
(21) Application number: 12842453.8
(22) Date of filing: 29.08.2012
(51) Int. Cl.: H01G 9/00, H01G 9/052

(54) **METHOD OF MANUFACTURING ANODE OF CAPACITOR**

(30) Priority: 18.10.2011 JP 2011229040
(71) Applicant: Showa Denko K.K., Tokyo 105-8518 (JP)
(72) Inventor: NAITO Kazumi, Tokyo 105-8518 (JP); YABE Shoji, Tokyo 105-8518 (JP)
(74) Representative: Strehl Schübel-Hopf & Partner
(86) International application number: PCT/JP2012/071759
(87) International publication number: WO 2013/058018

(57) **Abstract**

The present invention relates to a method of manufacturing an anode body of a capacitor, wherein an anode body of a capacitor is obtained by sintering a molded body of tungsten powder, comprising sintering the molded body by exposing the molded body to silicon vapor so that at least a part of the surface of the obtained sintered body is made to be tungsten silicide. The present invention enables efficient production of an anode body which comprises a tungsten sintered body containing tungsten silicide in the surface of the sintered body particles, which anode body can solve the leakage current (LC) problem in tungsten capacitors.

## Description

### TECHNICAL FIELD

The present invention relates to a method of manufacturing an anode body of a capacitor. Specifically, the present invention relates to a method of manufacturing an anode body of a capacitor comprising a sintered body of tungsten as an anode, and an electrolytic capacitor using an anode body comprising the sintered body.

### BACKGROUND ART

With the progress of small-size, high-speed and lightweight electronic devices such as cellular phones and personal computers, the capacitor used for these electronic devices is demanded to have a smaller size, a larger capacitance and a lower ESR.

An electrolytic capacitor is composed of a conductor (an anode body) as one electrode, a dielectric body formed in the surface layer of the electrode, and the other electrode (semiconductor layer) provided thereon.

As an example of such a capacitor, an electrolytic capacitor has been proposed, which capacitor is produced by anodically oxidizing an anode body for capacitors comprising a sintered body made of a valve-acting metal powder which can be anodized such as tantalum to form a dielectric layer made of the oxide of the metal on the surface of the anode body.

The electrolytic capacitor using tungsten as a valve-acting metal and employing the sintered body of the tungsten powder as an anode body can attain a larger capacitance compared to the electrolytic capacitor obtained with the same formation voltage by employing the anode body of the same volume using the tantalum powder having the same particle diameter. However, the electrolytic capacitor having the sintered body of the tungsten powder has been unpracticed as an electrolytic capacitor due to the large leakage current (LC). In order to solve this issue, a capacitor using the alloy of tungsten and other metals has been studied and has achieved some improvement in the leakage current, but it was not enough (JP-A-2004-349658 (U.S. 6,876,083 B2); Patent Document 1).

Patent Document 2 (JP-A-2003-272959) discloses a capacitor using an electrode of a tungsten foil having formed thereon a dielectric layer selected from WO₃, W₂N and WN₂, but the capacitor is not to solve the above-mentioned leakage current problem.

Also, Patent Document 3 (WO 2004/055843 publication (U.S. 7,154,743 B2)) discloses an electrolytic capacitor using an anode body selected from tantalum, niobium, titanium and tungsten, but it does not describe a specific example using tungsten in the specification.

### PRIOR ART

### Patent Document

Patent Document 1: JP-A-2004-349658
Patent Document 2: JP-A-2003-272959
Patent Document 3: WO 2004/055843

### DISCLOSURE OF THE INVENTION

### Problems to be Solved by the Invention

The present inventors previously filed a patent application directed to a tungsten powder, a part of whose surface is made to be tungsten silicide so as to make the silicon content within a specific range by mixing the silicon powder into the tungsten powder and allowing the mixture to react by heating under reduced pressure, as a tungsten powder which can solve the leakage current (LC) problem in the electrolytic capacitor comprising a sintered body of the tungsten powder as an anode body; an anode body of a capacitor made by sintering the powder; and an electrolytic capacitor using the anode body as an electrode (WO 2012/086272).

An object of the present invention is to provide a method for efficiently manufacturing a sintered body of tungsten comprising tungsten silicide in the surface of the sintered body particles without mixing with silicon powder and heating.

### Means to Solve the Problem

The present inventors have confirmed that the tungsten powder, a part of the surface of which is made to be tungsten silicide so as to make the silicon content within a specific range, can be efficiently manufactured by the method of silicidation by exposing the molded body of tungsten powder to silicon vapor at the time of sintering the molded body, and accomplished the present invention.

That is, the present invention relates to a method for manufacturing a sintered body of a capacitor, a sintered body of a capacitor, and an electrolytic capacitor as described below.
[1] A method for manufacturing an anode body of a capacitor, wherein an anode body of a capacitor is obtained by sintering a molded body of tungsten powder, comprising sintering the molded body by exposing the molded body to silicon vapor so that at least a part of the surface of the obtained sintered body is made to be tungsten silicide.
[2] The method for manufacturing an anode body as described in [1] above, comprising placing the molded body of tungsten powder with silicon powder in a sintering furnace and allowing a part or all of the silicon to evaporate at 1,100 to 2,600°C to be reacted with tungsten.
[3] The method for manufacturing an anode body as described in [1] or [2] above, wherein the silicon content of the anode body is 0.05 to 7 mass%.
[4] The method for manufacturing an anode body as described in any one of [1] to [3] above, wherein the tungsten silicide is W₅Si₃.
[5] The method for manufacturing an anode body as described in any one of [1] to [4] above, comprising a process of allowing at least one compound selected from tungsten nitride, tungsten carbide and tungsten boride to be included on a part of the surface of the anode body.
[6] The method for manufacturing an anode body as described in [5] above, using a molded body of tungsten powder which comprises at least one compound selected from tungsten nitride, tungsten carbide and tungsten boride in a part of the surface to obtain an anode body containing the above-mentioned compounds.
[7] The method for manufacturing an anode body as described in [5] or [6] above, wherein the nitrogen content of the anode body is 0.01 to 0.5 mass%.
[8] The method for manufacturing an anode body as described in any one of [5] to [7] above, wherein the carbon content of the anode body is 0.001 to 0.1 mass%.
[9] The method for manufacturing an anode body as described in any one of [5] to [8] above, wherein the boron content of the anode body is 0.001 to 0.1 mass%.
[10] The method for manufacturing an anode body as described in any one of [1] to [9] above, using a molded body of tungsten powder containing elemental phosphorous to obtain an anode body comprising elemental phosphorous in an amount of 1 to 500 ppm by mass.
[11] The method for manufacturing an anode body as described in any one of [1] to [10] above, using a molded body of tungsten powder containing oxygen to obtain an anode body comprising oxygen in an amount of 0.05 to 3 mass%.
[12] The method for manufacturing an anode body as described in any one of [1] to [11] above, wherein the content of each element other than tungsten, silicon, nitrogen, carbon, boron, phosphorous and oxygen in the anode body is 1,000 ppm by mass or less.
[13] An anode body of a capacitor, the surface of which is subjected to silicidation by a method described in any one of [1] to [12] above.
[14] An electrolytic capacitor comprising the anode body of a capacitor described in any one of [11] to [13] as one electrode and an dielectric body interposed between the electrode and a counter electrode.

### EFFECTS OF THE INVENTION

Using the tungsten powder obtained by the present invention, a part of which is silicified, as an anode body for a capacitor, enables production of electrolytic capacitors having an equal or higher capacitance and good LC characteristics per capacitance compared to the case of using a conventional tungsten sintered body of tungsten.

### EFFECTS OF THE INVENTION

The tungsten powder (unprocessed tungsten powder) having the lower limit of the particle size of about 0.5 µm as a material of the molded body of tungsten powder used in the present invention is commercially available. In the same volume, the smaller particle size enables the production of a sintered body (anode body) having a larger capacitance and is preferable. The tungsten powder having a still smaller particle diameter than a commercially available product can be obtained by, for example, pulverizing the tungsten trioxide powder under hydrogen atmosphere; or reducing the tungstic acid and tungsten halide using a reducing agent such as hydrogen and sodium, and appropriately selecting the reducing conditions.

Also, the tungsten powder can be obtained by reducing the tungsten-containing mineral directly or through several steps and by selecting the reducing conditions.

The tungsten powder as a material of a molded body may be the one made by granulating the above powder (Hereinafter, the granulated tungsten powder may be simply referred to as the "granulated powder"). As the powder for use in the electrolytic capacitors, the granulated powder is preferable since it facilitates the formation of fine pores in the anode body.

By using each of the above-mentioned ungranulated tungsten powders (hereinafter may be referred to as the "primary powder"), the fine pore distribution may be adjusted in the manner as JP-A-2003-213302 (WO 02/092864) discloses a case for the niobium powder.

The granulated powder can also be obtained by adding at least one member of the liquid such as water and liquid resin to the primary powder so as to be made into the granules having an appropriate size; and sintering the granules by heating under reduced pressure. The reduced-pressure condition and the high temperature standing condition can be determined within the above-mentioned range by a preliminary experiment. If there are no agglomerations of the granules with each other after the sintering, there is no need for pulverization.

Such granulated powder can be classified by a sieve into each particle having a similar diameter. When the powder is molded as an anode body for an electrolytic capacitor, the average particle size within a range of preferably 50 to 200 µm, more preferably 100 to 200 µm, is suitable because the powder can smoothly flow from the hopper of the molding machine to a mold.

The tungsten powder having an average primary particle diameter of 0.1 to 1 µm, preferably 0.1 to 0.3 µm can increase the capacitance of the electrolytic capacitor, particularly when the capacitor is produced from the granulated powder thereof.

When obtaining such a granulated powder, it is favorable to make the granulated powder so as to have a specific surface area (by BET method) of preferably 0.2 to 20 m²/g, more preferably 1.5 to 20 m²/g, by controlling the above-mentioned primary particle diameter because it can further increase the capacitance of the electrolytic capacitor.

The sintered body obtained by molding and sintering the above-described tungsten powder may be used as it is as an anode body, or the sintered body may be further processed to be used as an anode body. Such processing includes, for example, chemical processing such as allowing impurity elements such as oxygen to be included in the surface of the sintered body and physical processing such as connecting an anode lead wire to the sintered body. The processing may be conducted before manufacturing the sintered body as described later.

As the tungsten powder used in the present invention, the powder further containing, in a part of the surface, at least one member selected from tungsten nitride, tungsten carbide and tungsten bromide can be suitably used.

As an example of the method for nitriding a part of the surface of each tungsten powder, there is a method of placing the tungsten powder at 350 to 1,500°C under reduced pressure of a nitrogen gas atmosphere for from one minute to ten hours. Tungsten molded bodies or tungsten sintered bodies may be subjected to nitridation under the similar conditions as in the case of tungsten powder. Furthermore, the nitridation may be performed at any stage of the primary powder, after producing the granulated powder, or after producing the sintered body. Thus, the timing of the nitridation is not specified but it is preferable to perform nitridation in an early stage of the production process. The nitridation can prevent excessive oxidation of the powder when the powder is handled in air.

As the nitridation amount, it is preferable to allow nitrogen to remain in the anode body in an amount of 0.01 to 0.5 mass%, more preferably 0.05 to 0.3 mass%. When the primary powder is nitrided, the nitridation amount of the primary powder may be adjusted to the same to twofold amount of the target nitrogen content in the anode body as a measure. That is, a preliminary test is to be performed to adjust the nitridation amount of the primary powder within a range of 0.01 to 1 mass% so as to attain the above-mentioned preferable nitrogen content as an anode body.

In the above-mentioned nitrogen content, not only the nitrogen bonded to tungsten but also the nitrogen having no chemical bond with tungsten (e.g. nitrogen forming a solid solution) is included.

As an example of the method for carbonizing a part of the surface of the tungsten powder, there is a method of placing the tungsten powder at 300 to 1,500°C under reduced pressure (usually 10³ Pa or less) in a high temperature vacuum furnace using carbon electrodes for from one minute to ten hours. The carbon content can be adjusted by selecting the temperature and period of time. It is preferable to perform the carbonization so as to make the carbon content to 0.001 to 0.1 mass%, more preferably to 0.01 to 0.1 mass%. The timing of the carbonization is the same as the above-mentioned timing of the nitridation. However, since carbon remains in the anode body in a high yield, the carbon content can be adjusted within the above-mentioned range whenever the carbonization is conducted. When the nitrogen is introduced into the furnace with carbon electrodes under predetermined conditions, the carbonization and the nitridation occur simultaneously, which enables the production of the tungsten powder in which a part of the surface is nitrided and carbonized.

As an example of the method for boronizing a part of the surface of the tungsten powder, there is a method of placing the boron or a boron-containing compound as a boron source when granulating the tungsten powder. It is preferable to add the boron source so that the boron content in the obtained anode body may be preferably 0.001 to 0.1 mass%, more preferably 0.01 to 0.1 mass%. Good LC characteristics can be attained when the boron content is within the above-mentioned range. When a nitride powder is put into a furnace with carbon electrodes, with a boron source placed in the furnace, and is granulated, it is possible to produce a tungsten powder in which a part of the surface is silicified, nitrided, carbonized and boronized. When the boronization is performed to obtain a predetermined boron content, the LC characteristics are further improved in some cases.

Thus, it is preferable to provide a process for allowing a part of the surface of the anode body to include at least one compound selected from tungsten nitride, tungsten carbide and tungsten boride at any timing during the process of manufacturing the anode body.

The oxygen content in the anode body is preferably 0.05 to 3 mass%, more preferably 0.1 to 2 mass%. In case that the oxygen content is within the above-mentioned range, the LC characteristics of the produced electrolytic capacitors can be kept better.

As a method for allowing the anode body to contain oxygen, there is a method of oxidizing the surface of at least one of the tungsten materials to be used (primary powder, granulated powder, molded body or sintered body). For example, in case of producing any one of the tungsten materials among the primary powder, granulated powder, molded body or sintered body, gas containing oxygen is introduced at the time of taking out the material from a high temperature vacuum furnace. Inert gas such as argon and helium containing oxygen may be used as a gas containing oxygen. By feeding the gas gradually, a predetermined oxygen content can be obtained. When nitrogen gas containing oxygen is used as a gas containing oxygen in this process, nitridation can be performed at the same time with oxidation. In this case, the ratio between the oxygen and nitrogen as reaction products can be controlled by the concentration of each of the gases and the temperature when the tungsten material is taken out from a high temperature vacuum furnace. In case that the temperature at the time of taking out the material from the high temperature vacuum furnace is lower than 280°C, oxidation occurs preferentially over nitridation.

By such a method, an anode body can be allowed to contain oxygen at any process before manufacturing a sintered body so that the oxygen content of the finished anode body may fall within the above-mentioned range of the oxygen content, or can be taken out from a sintering furnace (high temperature vacuum furnace) so that the oxygen content may fall within the above-mentioned range of the oxygen content. Or, the tungsten material may be allowed to contain oxygen to a certain extent in an earlier stage of the process: i.e. during the stage of tungsten powder (preferably the primary powder or granulated powder, more preferably the primary powder) and final adjustment of the oxygen content may be made when the sintered body is taken out from the sintering furnace. By allowing the tungsten powder to contain oxygen to a certain extent at an earlier stage of the process, it is possible to reduce the deterioration due to the irregular excessive oxidation during the subsequent processes for producing anode bodies. The oxygen content of the tungsten powder used in the present invention is preferably 0.05 to 8 mass%, more preferably 0.08 to 1 mass%.

The phosphorous content in the anode body is preferably from 1 to 500 ppm by mass, more preferably 10 to 200 ppm by mass.

As an example of the methods for allowing the anode body to contain phosphorous in the anode body within the above-mentioned range, there is a method of using a phosphorous-containing material (e.g. primary powder and granulated powder of tungsten). For example, one method is to produce the phosphorous-containing tungsten powder by placing phosphorous or a phosphorous compound in the high temperature vacuum furnace as a phosphorous source at the time of producing a primary powder or a granulated powder of each tungsten powder. The phosphorous content in the phosphorous-containing material can be in the same range as the above-mentioned phosphorous content in the anode body.

It is preferable to allow the tungsten powder to contain phosphorus so as to make the phosphorous content within the above-mentioned range by controlling the amount of the phosphorous source and the like because the physical breakdown strength of the anode bodies produced thereof can be improved in some cases. When the phosphorous content falls within the above-mentioned range, the LC characteristics of the electrolytic capacitor produced thereof are further improved.

To attain better LC characteristics, it is preferable to keep the content of each of impurity elements other than each element of tungsten, silicon, nitrogen, carbon, boron, oxygen and phosphorous to 1,000 ppm by mass or lower. In order to keep the content of these elements to the above-mentioned value or lower, the amount of the impurity elements contained in the raw materials, pulverizing member to be used, containers and the like should be closely examined.

In a method for producing an anode body of a capacitor by sintering a molded body of tungsten powder, the molded body is sintered by being exposed to silicon vapor to thereby produce a sintered body in which at least a part of the surface of the tungsten particles constituting the sintered body is silicified in the present invention. In the present invention, the surface of the molded body, sintered body or anode body includes not only the outer surface but the surface inside the pores thereof.

The anode body of the present invention in which at least a part of the surface is silicified can be produced, for example, as described below.

At least a part of the surface of the tungsten sintered body is silicified by placing a container of silicon powder together with a tungsten molded body in a sintering furnace and evaporating a part or whole of the silicon at a temperature of 1,100 to 2,600°C, which is the heating temperature during sintering; or by reacting silicon with tungsten under silicon vapor.

In this method, the tungsten particles constituting the tungsten molded body reacts with the silicon from the surface of the tungsten particles and tungsten silicide such as W₅Si₃ is formed and localized generally within 50 nm from the surface layer of the tungsten particles. Hence, the core of the tungsten particle remains as a highly-conducting metal, which suppresses the equivalent series resistance of the capacitor produced using the tungsten powder, which is preferable. The tungsten silicide content can be adjusted by the silicon diameter, silicon amount to be added, number of molded bodies, sintering time and sintering temperature. The silicon content of the tungsten sintered body of the present invention is preferably 0.05 to 7 mass%, and particularly preferably 0.2 to 4 mass%. The tungsten sintered body containing silicon within the above-mentioned range is a preferable one for an anode body of a capacitor, particularly imparting a capacitor with good LC characteristics.

Sintering is performed at high temperature under reduced pressure. When the above-mentioned low-pressure condition is preferably set to 10⁻¹ Pa or lower, more preferably 10⁻³ Pa or lower, it facilitates controlling the oxygen content of the tungsten powder to the above-mentioned preferable range.

The reaction temperature of tungsten and silicon is preferably 1,100°C or higher and 2,600°C or lower. The smaller the particle diameter of the silicon to be used, the silicification can be carried out at a lower temperature. However, when the reaction temperature is lower than 1,100°C, it takes time for silicification. When the reaction temperature exceeds 2,600°C, the silicon comes to evaporate easily at high speed, and maintenance of the high-temperature vacuum furnace adaptable to the high speed evaporation is required.

The time period for which the molded body is left at a high temperature is preferably three minutes or more and less than two hours. The optimum conditions of the temperature and period of time suitable for the high-temperature vacuum furnace to be used can be determined by analyzing the sintered body produced in a preliminary experiment.

After the reaction of tungsten and silicon is completed, the reacted molded body may be taken out from the sintering furnace once and be subjected to final sintering in the same or a different kind of sintering furnace. To perform the sintering in this manner is preferable because it makes the sintering electrodes less likely to be damaged.

The sintered body obtained by the method of the present invention has a pore diameter distribution of 0.04 to 10 µm and an average pore diameter (D₅₀) of 0.1 to 4 µm.

An electrolytic capacitor is fabricated using an anode body produced by the method of the present invention as one electrode and a dielectric body interposed between the electrode and a counter electrode (cathode). A dielectric body is formed on the surface of the anode body (including the surface inside the pores) by, for example, electrolytic oxidation of the anode body. A counter electrode is formed by, for example, stacking a semiconductor layer such as electrically conductive polymer on the dielectric body.

### EXAMPLES

The present invention is described below by referring to Examples and Comparative Examples, but the present invention is not limited thereto.

In the present invention, the measurement of the particle diameter, the specific surface area, pore diameter distribution, average pore diameter and elemental analysis were carried out by the methods described below.

The particle diameter was measured by using HRA9320-X100 manufactured by Microtrac Inc. and the particle size distribution was measured by the laser diffraction/scattering method. A particle size value (D₅₀; µm) when the accumulated volume % corresponded to 50 volume % was designated as the average particle size.

The BET specific surface area and pore diameter were measured by using NOVA2200E (manufactured by SYSMEX Corporation). The pore diameter range from D₅ (when the accumulated volume % of the pores corresponded to 5 volume %) to D₉₅ (when the accumulated volume % of pores corresponded to 95 volume %) was designated as the pore distribution. A pore size value (D₅₀; µm) when the accumulated volume % corresponded to 50 volume % was designated as the average pore size.

For the elemental analysis, ICP emission spectrometry was performed by using ICPS-8000E (manufactured by Shimadzu Corporation).

### Example 1:

The tungsten powder having an average diameter of 0.4 µm obtained by reducing ammonium tungstate with hydrogen was left to stand at 1,400°C under reduced pressure of 10⁻² Pa for 30 minutes, taken out at room temperature, crushed with a hammer mill and subjected to classification to obtain granulated powder having a particle diameter range of 20 to 180 µm and an average particle diameter of 115 µm. The powder was put into a hopper of the forming machine TAP-2R manufactured by OPPC Co., Ltd. and plural pieces of molded bodies being 1.02 x 1.64 x 4.62 mm in size (55 mg) were produced by molding the granulated powder so that a tungsten wire of 0.29 mm in diameter stands in the molded body and protrudes outside by 6 mm. 120 pieces of the molded bodies uniformly placed on 0.4 g of commercially-available silicon powder having an average particle diameter of 1 µm put in a tungsten container were placed in a sintering furnace. The furnace was depressurized to a reduced pressure of 10⁻² Pa and the molded bodies were left to stand at 1500°C for 20 minutes. After the furnace was cooled to room temperature and air was gradually introduced to the furnace, the molded bodies were taken out to obtain sintered bodies being 1.01 x 1.50 x 4.45 mm in size. The obtained sintered bodies had a specific surface area of 0.5 m²/g, pore diameter distribution of 0.04 to 10 µm and average pore diameter of 0.25 µm.

The elemental analysis of the obtained sintered body revealed that they contained 4.4 mass% of silicon and 0.76 mass% of oxygen. The content of each of other impurity elements was 300 ppm by mass or less.

The sintered body was crushed and the fraction near to the center of the sintered body was analyzed by an x-ray diffractometer (X'pert PRO; manufactured by PANalytical B. V.). Tungsten silicide was detected as a reaction product on the surface inside the pores of the sintered body. Most of the detected tungsten silicide was W₅Si₃. Sputtered surface of the sintered body was also analyzed in a similar manner and it was found that tungsten silicide as a reaction product exists in a range within 30 nm in depth from the surface. That is, it was confirmed that silicon exists as tungsten silicide in at least a part of the surface layer of the particles of the sintered body.

### Examples 2 to 5 and Comparative Examples 1 to 2:

Sintered bodies were obtained in the same manner as in Example 1 except that the silicon amount in the container and the number of molded bodies were changed as in Table 1. The specific surface area and pore diameter distribution in each example were similar to those in Example 1. The contents of silicon and oxygen of the sintered body obtained in each example resulted in those as in Table 1, and the content of each of other impurity elements was 300 ppm by mass or less.

### Example 6:

A primary powder of tungsten having an average particle diameter of 0.1 µm and a specific surface area of 9.6 m²/g was obtained by vapor phase hydrogen reduction of tungsten chloride at 400°C. The powder was left to stand at 1,300°C under reduced pressure of 10⁻² Pa for 30 minutes. After cooling to 1,100°C, nitrogen gas was introduced to the furnace and left to stand for five hours. After cooling to room temperature, air was gradually introduced into the furnace and the powder was taken out. Subsequently, the powder was crushed with a hammer mill and subjected to classification to obtain granulated powder having particle diameter distribution of 40 to 160 µm and average particle diameter of 100 µm. A part of the surface of the granulated powder was nitrided and the nitrogen content was 0.25 mass%. Molded bodies (31 mg) being 1.02 x 2.34 x 1.86 mm in size were manufactured in the same manner as in Example 1 except that the built-in mold in the forming machine was changed. 200 pieces of the molded bodies uniformly placed on 0.2 g of commercially-available silicon powder having an average diameter of 1 µm put in the tungsten container were placed in a sintering furnace. The furnace was depressurized to a reduced pressure of 10⁻² Pa and the molded bodies were left to stand at 1450°C for 20 minutes. After the furnace was cooled to room temperature and air was gradually introduced to the furnace, the molded bodies were taken out to obtain sintered bodies being 1.00 x 2.27 x 1.72 mm in size. The obtained sintered bodies had a specific surface area of 4.5 m²/g, pore diameter distribution of 0.05 to 10 µm and average pore diameter of 0.1 µm.

The elemental analysis of the obtained sintered bodies revealed that they contained 0.7 mass% of silicon, 1.22 mass% of oxygen and 0.25 mass% of nitrogen. The content of each of other impurity elements was 200 ppm by mass or less.

### Example 7:

Commercially-available tungsten powder (primary powder) having an average particle diameter of 1 µm was subjected to classification to obtain the portion having a diameter of 0.3 to 20 µm. A boron solution (a 20% nitric acid aqueous solution in which boron is dissolved in an amount of 0.1 mass%) was added and mixed so that boron is to be added in an amount of 0.03 mass% of the classified powder. The resultant solution was left to stand at 260°C under reduced pressure of 7 x 10² Pa for two hours to be dried and cooled to room temperature. Thus treated tungsten powder was molded by the forming machine used in Example 1 to produce plural pieces of molded bodies similar to those in Example 1. Next, sintered bodies were produced in the same manner as in Example 1 except for using 0.6 g of commercially-available silicon powder having an average particle diameter of 3 µm instead of the silicon powder in Example 1. The obtained sintered bodies had a specific surface area of 0.26 m²/g, pore diameter distribution of 0.04 to 6 µm and average pore diameter of 0.4 µm.

The elemental analysis of the obtained sintered bodies revealed that they contained 3.9 mass% of silicon, 0.33 mass% of oxygen and 300 ppm by mass of boron. The content of each of other impurity elements was 200 ppm by mass or less.

The obtained sintered body was crushed and fraction near to the center of the sintered body was analyzed by an x-ray diffractometer (X'pert PRO; manufactured by PANalytical B.V.). Tungsten silicide was detected as a reaction product on the surface inside the pores of the sintered body. Most of the detected tungsten silicide was W₅Si₃. Sputtered surface of the sintered body was also analyzed in a similar manner and it was found that tungsten silicide as a reaction product exists in a range within 40 nm in depth from the surface. That is, it was confirmed that silicon exists as tungsten silicide in at least a part of the surface layer of the particles of the sintered body.

### Example 8:

20 g of the tungsten primary powder of Example 6 was well mixed with a separately prepared solution of 0.3 g of stearic acid dissolved in 3 g of toluene to obtain a granular mixture having an average particle diameter of 160 µm. Phosphoric acid was added to the obtained granular mixture so as to be in an amount of 0.05 mass% and mixed well. The mixture was placed in a high-temperature vacuum furnace and left to stand at a pressure at 1 x 10⁻² Pa and 1,340°C for 20 minutes. After cooled to room temperature, the furnace was returned to an atmospheric pressure. The thus obtained tungsten granulated powder had an average particle diameter of 180 µm and a specific surface area of 8.2 m²/g. Subsequently, after producing plural molded bodies in the same manner as in Example 6, sintered bodies were produced in the same manner as in Example 6. The obtained sintered bodies had a specific surface area of 5.2 m²/g, pore diameter distribution of 0.05 to 8 µm and an average pore diameter of 0.1 µm.

The elemental analysis of the obtained sintered bodies revealed that they contained 0.8 mass% of silicon, 1.5 mass% of oxygen, 0.01 mass% of phosphorous and 0.03 mass% of carbon. The content of each of other impurity elements was 300 ppm by mass or less.

**Table 1**

| | Silicon content in the container (g) | Number of molded bodies in the container (units) | Silicon content in the sintered bodies (mass%) | Content of other main elements in the sintered bodies (mass%) | |
|---|---|---|---|---|---|
| Example 1 | 0.4 | 120 | 4.4 | oxygen | 0.76 |
| Example 2 | 0.05 | 200 | 0.05 | oxygen | 0.64 |
| Example 3 | 0.1 | 200 | 0.2 | oxygen | 0.70 |
| Example 4 | 0.2 | 200 | 0.5 | oxygen | 0.56 |
| Example 5 | 0.4 | 80 | 6.9 | oxygen | 0.81 |
| Example 6 | 0.2 | 200 | 0.7 | oxygen | 1.22 |
| | | | | nitrogen | 0.25 |
| Example 7 | 0.6 | 120 | 3.9 | oxygen | 0.33 |
| | | | | boron | 0.03 |
| Example 8 | 0.2 | 200 | 0.8 | oxygen | 1.5 |
| | | | | carbon | 0.03 |
| | | | | phosphorous | 0.01 |
| Comparative Example 1 | 0.05 | 250 | 0.03 | oxygen | 0.72 |
| Comparative Example 2 | 0.4 | 50 | 7.3 | oxygen | 0.68 |

The sintered bodies obtained in Examples 1 to 8 and Comparative Examples 1 to 2 were used as an anode body for an electrolytic capacitor. The anode body was subjected to forming (formation of dielectric) in an aqueous solution of 0.1 mass% sulfuric acid at 10 V for two hours to form a dielectric layer in the surface of the anode body. The anode body having a dielectric layer formed therein was immersed in an aqueous solution of 30% sulfuric acid in which platinum black was used as a cathode to form an electrolytic capacitor, and the capacitance and LC value of the capacitor were measured. The capacitance was measured by using an LCR meter manufactured by Agilent at room temperature, 120 Hz and bias voltage of 2.5 V. The LC value was measured 30 seconds after applying a voltage of 2.5 V at room temperature.

The measured values of the capacitance, LC values, and the LC values per capacitance are shown in Table 2.

**Table 2**

| | Capacitance (µF) | LC (µA) | LC value/capacitance |
|---|---|---|---|
| Example 1 | 390 | 12.5 | 0.032 |
| Example 2 | 440 | 20.3 | 0.046 |
| Example 3 | 450 | 2.2 | 0.0049 |
| Example 4 | 450 | 2.0 | 0.0044 |
| Example 5 | 370 | 16.4 | 0.044 |
| Example 6 | 1,080 | 9.5 | 0.0088 |
| Example 7 | 230 | 1.5 | 0.0065 |
| Example 8 | 1,000 | 9.1 | 0.0091 |
| Comparative Example 1 | 410 | 68.4 | 0.17 |
| Comparative Example 2 | 330 | 51.2 | 0.16 |

Table 2 shows the LC values per capacitance of the electrolytic capacitor in Examples 1 to 8 is less than 0.1 while those exceed 0.1 in Comparative Examples 1 to 2.

## Claims

1. A method for manufacturing an anode body of a capacitor, wherein an anode body of a capacitor is obtained by sintering a molded body of tungsten powder, comprising sintering the molded body by exposing the molded body to silicon vapor so that at least a part of the surface of the obtained sintered body is made to be tungsten silicide.

2. The method for manufacturing an anode body as claimed in claim 1, comprising placing the molded body of tungsten powder with silicon powder in a sintering furnace and allowing a part or all of the silicon to evaporate at 1,100 to 2,600°C to be reacted with tungsten.

3. The method for manufacturing an anode body as claimed in claim 1 or 2, wherein the silicon content of the anode body is 0.05 to 7 mass%.

4. The method for manufacturing an anode body as claimed in any one of claims 1 to 3, wherein the tungsten silicide is W₅Si₃.

5. The method for manufacturing an anode body as claimed in any one of claims 1 to 4, comprising a process of allowing at least one compound selected from tungsten nitride, tungsten carbide and tungsten boride to be included in a part of the surface of the anode body.

6. The method for manufacturing an anode body as claimed in claim 5, using a molded body of tungsten powder which comprises at least one compound selected from tungsten nitride, tungsten carbide and tungsten boride on a part of the surface to obtain an anode body containing the above-mentioned compounds.

7. The method for manufacturing an anode body as claimed in claim 5 or 6, wherein the nitrogen content of the anode body is 0.01 to 0.5 mass%.

8. The method for manufacturing an anode body as claimed in any one of claims 5 to 7, wherein the carbon content of the anode body is 0.001 to 0.1 mass%.

9. The method for manufacturing an anode body as claimed in any one of claims 5 to 8, wherein the boron content of the anode body is 0.001 to 0.1 mass%.

10. The method for manufacturing an anode body as claimed in any one of claims 1 to 9, using a molded body of tungsten powder containing elemental phosphorous to obtain an anode body comprising elemental phosphorous in an amount of 1 to 500 ppm by mass.

11. The method for manufacturing an anode body as claimed in any one of claims 1 to 10, using a molded body of tungsten powder containing oxygen to obtain an anode body comprising oxygen in an amount of 0.05 to 3 mass%.

12. The method for manufacturing an anode body as claimed in any one of claims 1 to 11, wherein the content of each element other than tungsten, silicon, nitrogen, carbon, boron, phosphorous and oxygen in the anode body is 1,000 ppm by mass or less.

13. An anode body of a capacitor, the surface of which is subjected to silicidation by a method claimed in any one of claims 1 to 12.

14. An electrolytic capacitor comprising the anode body of a capacitor claimed in any one of claims 11 to 13 as one electrode and an dielectric body interposed between the electrode and a counter electrode.
